# EUROPÄISCHE PATENTANMELDUNG

(11) **EP 0 873 917 A2**
(43) Veröffentlichungstag der Anmeldung: **28.10.1998**
(21) Anmeldenummer: 98105782.1
(22) Anmeldetag: 30.03.1998
(51) Int. Cl.: B60R 21/26

(54) **Fliehkraftabscheider**

(30) Priorität: 21.04.1997 DE 19716652
(71) Anmelder: Biemold, Wilhelm, 3740 Bilzen (BE)
(72) Erfinder: Biemold, Wilhelm, 3740 Bilzen (BE)
(74) Vertreter: König, Werner, Dipl.-Ing.

(57) **Zusammenfassung**

Bekannte Fliehkraftabscheider weisen einen noch zu geringen Wirkungsgrad auf.

Der Wirkungsgrad soll erheblich erhöht werden, indem in dem Ringraum (6), in den der Gasstrom von innen tangential einströmt, eine mit der Außenwand (12) einen ringförmigen Hohlraum (9) bildende Zwischenwand (7) konzentrisch angeordnet ist, die entlang ihres Umfangs mit mehreren, den radial außenliegenden Bereich des Gasstromes tangential mindestens teilweise in den ringförmigen Hohlraum (9) ableitenden Einfangöffnungen (8) versehen ist.

Der Fliehkraftabscheider ist insbesondere für die Verwendung in Gasgeneratoren von Airbag-Schutzeinrichtungen geeignet, bei denen heiße und teilweise flüssige und brennende Partikel aus dem Gasstrom abgetrennt werden müssen.

## Beschreibung

Die Erfindung betrifft einen Fliehkraftabscheider, insbesondere für die Verwendung in Gasgeneratoren von Airbag-Schutzeinrichtungen. Der Fliehkraftabscheider ist als Ringraum mit einer konzentrischen Innen- und Außenwand und zwei Stirnwänden ausgebildet, wobei die Innenwand mit ein Gas- oder Gas-Staub-Gemisch von innen in den Ringraum leitenden, drallerzeugenden Einströmöffnungen und die Außenwand oder eine Stirnwand mit Außlaßöffnungen versehen sind.

Zum Abtrennen von Gasen aus einem Gasgemisch oder von Partikeln aus einem Gas-Staub-Gemisch werden für verschiedene Einsatzzwecke Fliehkraftabscheider benutzt. Für Gasgeneratoren von Airbag-Schutzeinrichtungen in Kraftfahrzeugen sind z.B. derartige Abscheider als Fliehkraft-Staubabscheider zum Trennen der heißen Verbrennungsrückstände, die beim Verbrennen eines Festtreibstoffes entstehen, vom Gasstrom bekannt (DE-C 23 64 268).

Das Treibgas für einen Airbag wird durch Zünden eines Festtreibstoffsatzes erzeugt. Es enthält einen hohen Anteil heißer, zum großen Teil auch flüssiger und brennender Verbrennungsrückstände, die nicht in den Airbag gelangen dürfen, da sie die Haut des Airbags durchschlagen würden und auch zu hohen Temperaturen im Bereich der Lenkradnabe und zu möglichen Verbrennungen der Kraftfahrzeug-Insassen führen können. Es ist deshalb eine Reihe von Lösungen bekannt, in denen Filter in den Gasstrom zwischen der Brennkammer des Gasgenerators und dem Airbag gesetzt werden. Filter führen jedoch zu einer starken Querschnittsverringerung und somit zu einer Druckminderung. Außerdem werden bereits festgehaltene Partikel durch den nachfolgenden Gasstrom mitgerissen.

Eine Möglichkeit, die Partikel aus dem Gasstrom bei geringeren Druckverlusten zu entfernen, wurde deshalb mit der vorgenannten Lösung des Einsatzes eines Fliehkraft-Staubabscheiders gesehen. Der Vorschlag sieht einen Ringraum vor, in den der Gasstrom von innen durch drallerzeugende Außtrittsöffnungen der inneren Brennkammer hineingeleitet wird. Er trifft auf eine konisch verlaufende äußere Wand und macht dadurch eine schraubenartige, beschleunigte Bewegung, bei der sich die Partikel an dieser Wand absetzen sollen. Die Ergebnisse mit dieser Anordnung sind indessen unbefriedigend. Es erfolgt nur teilweise eine Kondensation der Partikel an der äußeren Wand des Ringraumes. Teilweise prallen die hochbeschleunigten Partikel von der Wand wieder zurück und werden vom Gasstrom dann mitgerissen. Außerdem bilden die Partikel, die sich an der Wand ablagern, sofort eine isolierende Schicht, die ein weiteres Kondensieren verhindert. Zusätzliche Maßnahmen zur Erhöhung des Kühleffektes durch mehrfache Umlenkung des Gasstroms führen wiederum zur Druckminderung. Praktisch ausgeführte Gasgeneratoren sind deshalb weiter bei dem Prinzip der Filterung geblieben.

Durch die DE-A 195 05 580 wurde das Prinzip des Fliehkraft-Staubabscheiders wieder aufgegriffen. Nach diesem Vorschlag trifft der Gasstrom durch drallerzeugende Austrittsöffnungen der inneren Brennkammer aus und trifft nach zweifacher 90°-Umlenkung radial und tangential auf eine Wand eines Ringraumes, an der sich die Partikel absetzen sollen. Der Gasstrom wird wiederum um 90° abgelenkt, durch ein Filter geleitet und - noch einmal um 90° abgelenkt - radial nach außen zum Airbag geleitet. Wie unschwer zu erkennen ist, führt auch hier die mehrfache Umlenkung des Gastromes zu einem starken Druckabfall.

Fliehkraftabscheider für andere Zwecke sind ähnlich aufgebaut und weisen für das Trennen von Gasen oder für ein Abtrennen von Partikeln aus einem Gasstrom einen noch zu geringen Wirkungsgrad auf.

Der Erfindung liegt die Aufgabe zugrunde, einen Fliehkraftabscheider der eingangs genannten Art anzugeben, mit der der Wirkungsgrad erheblich erhöht werden kann.

Erfindungsgemäß wird die Aufgabe dadurch gelöst, daß in dem Ringraum eine mit der Außenwand einen ringförmigen Hohlraum bildende Zwischenwand konzentrisch angeordnet ist, die entlang ihres Umfangs mit mehreren, den radial außenliegenden Bereich des Gasstromes tangential mindestens teilweise in den ringförmigen Hohlraum ableitenden Einfangöffnungen versehen ist.

Bevorzugt verläuft die Zwischenwand in Axialrichtung des Ringraumes konisch. Der Gasstrom erhält dadurch nicht nur einen Drall, sondern auch noch eine axiale Bewegungskomponente und eine weitere Beschleunigung.

Die Einfangöffnungen können über die gesamte axiale Länge der Zwischnwand angeordnet sein. Sie sollten auf jeden Fall den größeren Teil der axialen Länge erfassen. Sie können auch am Umfang der Zwischenwand in axialer Richtung gegeneinander versetzt sein, so daß auf diese Weise der radial außenliegende Bereich des Gasstromes auf der gesamten Länge der Zwischenwand erfaßt wird.

Der durch die Zwischenwand gebildete ringförmige Hohlraum wirkt für abzuscheidende Partikel wie eine Falle. Einmal in dem Hohlraum eingefangene Partikel können höchstens im Hohlraum selbst aufwirbeln, können vom Gasstrom aber nicht mehr mitgerissen werden.

Ähnlich ist die Wirkung bei einer Gastrennung. Hier liegt ein Unterschied nur insofern vor, als daß das in den ringförmigen Hohlraum gelangende Gas durch Auslaßöffnungen im ringförmigen Hohlraum, bevorzugt axial, abgeleitet wird, während bei einer Partikelabtrennung die Auslaßöffnungen mit dem Ringraum in Verbindung stehen.

Die Wirksamkeit des Fliehkraftabscheiders wird bei Benutzung als Staubabscheider wesentlich erhöht, wenn der ringförmige Hohlraum außerdem erfindungsgemäß mit einem gasdurchlässigen Füllmaterial ausgefüllt ist. Als Füllmaterial kommt z.B. für einen Einsatz in Gasgeneratoren in Airbag-Schutzeinrichtungen ein Material mit hoher Wärmeleitfähigkeit, beispielsweise Metallwolle, in Frage.

Für andere Zwecke kann eine Befüllung mit Mineralwolle, textilem Fasermaterial oder einem porösen Kunststoff vorgesehen sein. In besonderen Anwendungsfällen kann dieser Kunststoff elektrostatisch vorgeladen sein.

Die Wirkung läßt sich weiter erhöhen wenn zudem erfindungsgemäß zwischen dem ringförmigen Hohlraum und der Außenwand ein ringförmiger Staubauffangraum gebildet ist, der von dem ringförmigen Hohlraum durch ein Filter getrennt ist. Der Filter kann beispielsweise ein Drahtsieb sein.

Zum Druckausgleich im Gasstrom kann der ringförmige Hohlraum in erfindungsgemäß bevorzugter Weise mit Druckausgleichsöffnungen versehen sein. Die Druckausgleichsöffnungen können zum Ringraum führen, sich also in der Zwischenwand befinden, oder direkt mit den Auslaßöffnungen in Verbindung stehen, indem von dem ringförmigen Hohlraum in axialer Richtung Druckausgleichsöffnungen zu dem Gasstrom außerhalb des Ringraumes hinführen.

In erfindungsgemäß bevorzugter Weise kann der Fliehkraftabscheider konzentrisch einen Zünder und eine einen Festtreibstoffsatz enthaltende Brennkammer umgebend mit diesen zu einem Gasgenerator für Airbag-Schutzeinrichtungen zusammengesetzt sein.

In ebenso erfindungsgemäß bevorzugter Weise kann der Fliehkraftabscheider auch axial an einen Zünder und eine einen Festtreibstoffsatz enthaltende Brennkammer anschließend mit diesen zu einem Gasgenerator für Airbag-Schutzeinrichtungen zusammengesetzt sein.

Die Erfindung soll nachstehend anhand eines Ausführungsbeispiels in Form eines Fliehkraft-Staubabscheiders für einen Airbag-Gasgenerator näher erläutert werden. In den zugehörigen Zeichnungen zeigen
- Fig. 1: den erfindungsgemäßen Fliehkraft-Staubabscheider im Zusammenbau mit einem Airbag-Gasgenerator im Schnitt,

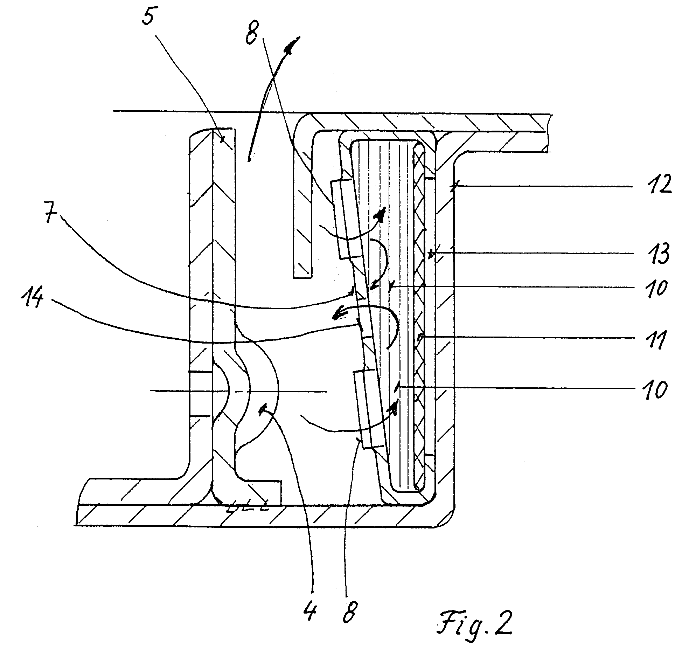

- Fig. 2: eine vergrößerte Ansicht nur des Fliehkraft-Staubabscheiders gem. Fig. 1 im Schnitt,
- Fig. 3: den erfindungsgemäß aufgebauten ringförmigen Hohlraum in geschnittener Draufsicht (Schnitt A-A gem. Fig. 4),
- Fig. 4: eine Seitenansicht des erfindungsgemäß ausgeführten ringförmigen Hohlraums im Schnitt und
- Fig. 5: eine zweite Variante eines Fliehkraft-Staubabscheiders für einen Airbag-Gasgenerator im Schnitt.

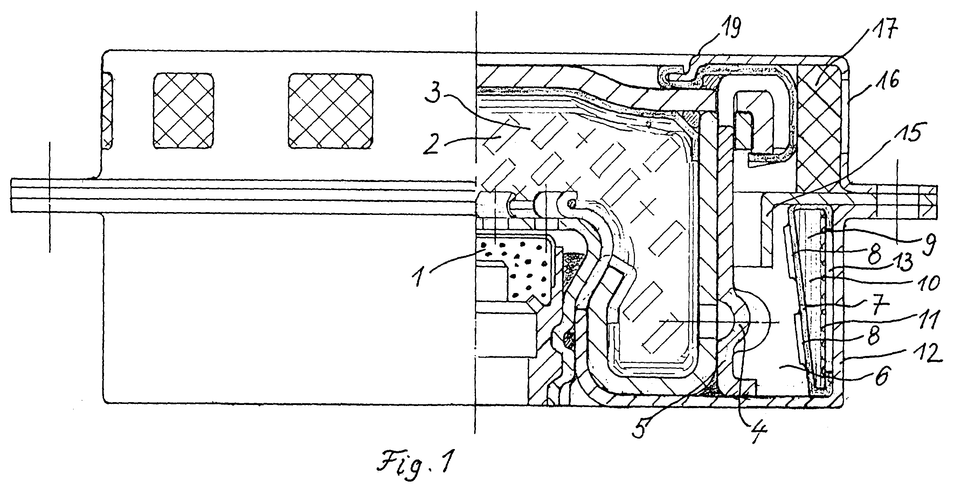

Fig. 1 zeigt im Schnitt einen konzentrisch aufgebauten Airbag-Gasgenerator. Ein Zündelement 1 zündet bei Auslösung einer Airbag-Schutzeinrichtung die Feststofftabletten 2 in einer Brennkammer 3. Das entstehende Reaktionsgas gelangt durch die Einströmöffnungen 4 einer Innenwand 5 in den als Staubabscheider und diesem Falle auch als Expansionsraum wirkenden Ringraum 6. Die Einströmöffnungen 4 sind so gerichtet, daß das Reaktionsgas einen Drall erhält. Im Ringraum 6 trifft das Reaktionsgas durch die Fliehkraft auf die Zwischenwand 7 und wird durch den konischen Verlauf der Zwischenwand 7 beschleunigt und zu einer schraubenförmigen Bewegung veranlaßt.

In der Zwischenwand 7 sind durch Ausklinkungen Einfangöffnungen 8 gebildet, die den radial außenliegenden Gasstrom, der heiße, partikelförmige Abbrandrückstände enthält, zum größten Teil auffangen und in den ringförmigen Hohlraum 9 leiten. Der ringförmige Hohlraum 9 ist mit Metallwolle 10 gefüllt, an der die Partikel kondensieren und anhaften. Partikel, die die Metallwolle 10 passieren können, werden von einem den ringförmigen Hohlraum 9 nach außen abschließenden Drahtsieb 11 aufgefangen und verbacken dabei. Partikel, die das Drahtsieb 11 durchdringen können, gelangen in den zwischen dem Drahtsieb 11 und der Außenwand 12 gebildeten Staubauffangraum 13 und werden dort festgehalten.

Die Metallwolle 10 und das Drahtsieb 11 wirken in Verbindung mit der Zwischenwand 7 wie ein Ventil, so daß einmal eingefangene Partikel von dem nachfolgenden Gasstrom nicht mehr aufgewirbelt und aufgenommen werden können.

Zum Druckausgleich sind in der Zwischenwand 7 weitere Öffnungen 14 vorgesehen.

Noch im Gasstrom verbliebene Partikel, die sich im radial äußeren Bereich des Gasstromes befinden, werden an einem Blechwinkel 15 aufgefangen, während der saubere Teil des Gasstromes innen am Blechwinkel 15 vorbeigeführt wird. Er passiert im vorliegenden Ausführungsbeispiel einen vor der Auslaßöffnung 16 in der Außenwand 12 angeordneten Auslaßfilter 17.

Durch die erfindungsgemäßen Maßnahmen wird gewährleistet, daß der Gasstrom keine mehrfachen und abrupten Richtungsänderungen erfährt und die im Gasstrom enthaltenen Partikel kondensieren können und eingefangen werden.

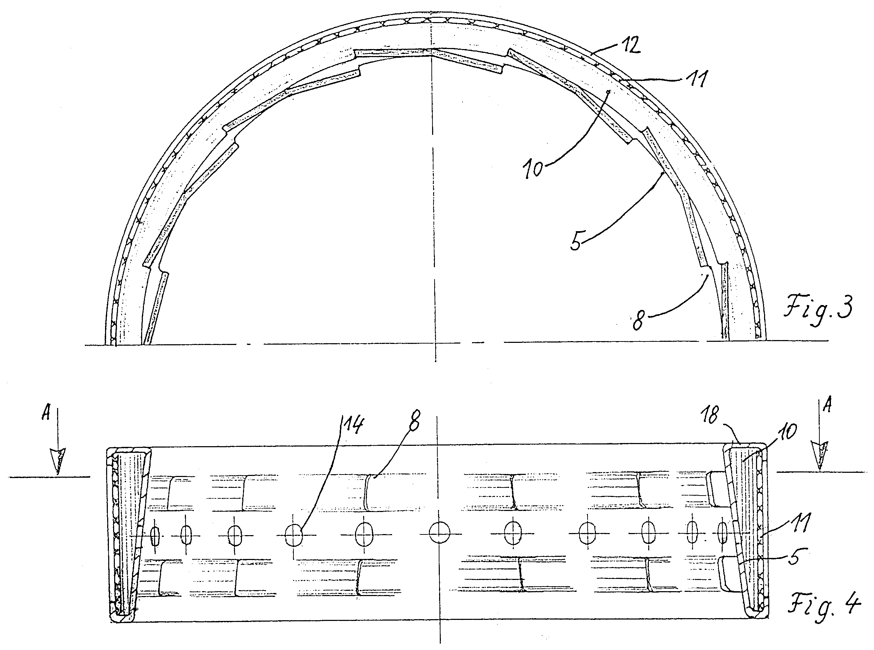

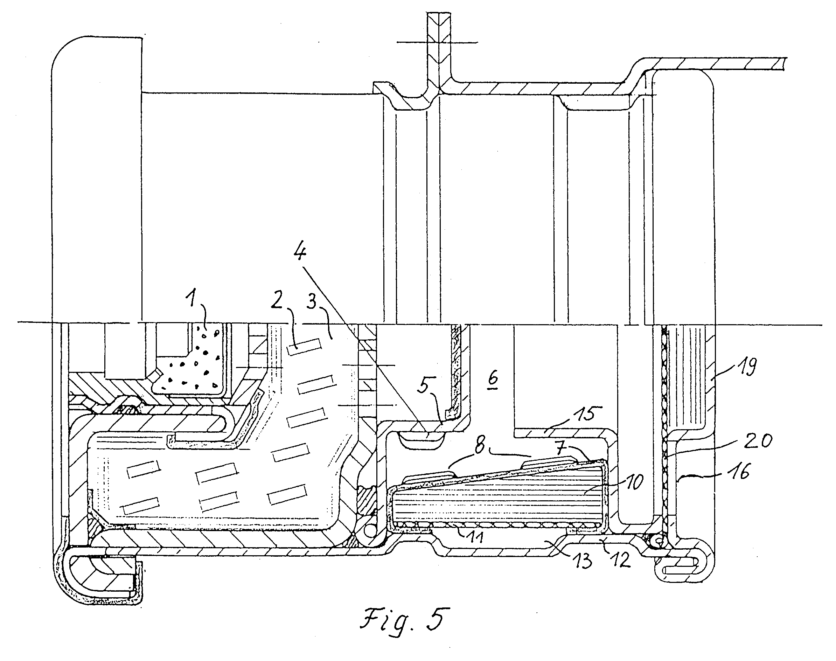

Die Figuren 3 und 4 zeigen nur den von einem Zwischenwandteil 18 durch Abbiegen gebildeten ringförmigen Hohlraum 9, der mit der Metallwolle 10 gefüllt und nach außen mit dem Drahtsieb 11 abgeschlossen ist. Aus der Schnittdarstellung in Fig. 3 sind die Einfangöffnungen 8 gut ersichtlich, die durch Ausklinkungen in der Zwischenwand 7 gebildet sind.

Fig. 5 zeigt eine zweite Variante eines ebenfalls mit einem Airbag-Gasgenerator zusammenwirkenden Staubabscheiders, hier allerdings in einer axial hintereinanderliegenden Anordnung. Der Staubauffangraum 13 ist in diesem Fall durch eine Ausstülpung der Außenwand 12 gegenüber der ersten Variante etwas vergrößert. Die Auslaßöffnungen 16 befinden sich in der Stirnwand 19 und sind mit einem Drahtsieb 20 abgedeckt.

## Patentansprüche

1. Fliehkraftabscheider, insbesondere für die Verwendung in Gasgeneratoren von Airbag-Schutzeinrichtungen, der als Ringraum (6) mit einer konzentrischen Innen- (5) und Außenwand (12) und zwei Stirnwänden (19) ausgebildet ist, wobei die Innenwand (5) radial innen mit ein Gas- oder Gas-Staub-Gemisch in den Ringraum (6) leitenden, drallerzeugenden Einströmöffnungen (4) und eine weitere Wand mit Außlaßöffnungen (16) versehen sind, **dadurch gekennzeichnet,** daß in dem Ringraum (6) eine mit der Außenwand (12) einen ringförmigen Hohlraum (9) bildende Zwischenwand (7) konzentrisch angeordnet ist, die entlang ihres Umfangs mit mehreren, den radial außenliegenden Bereich des Gasstromes tangential mindestens teilweise in den ringförmigen Hohlraum (9) ableitenden Einfangöffnungen (8) versehen ist.

2. Fliehkraftabscheider nach Anspruch 1, dadurch gekennzeichnet, daß die Zwischenwand (7) in Axialrichtung des Ringraumes (6) konisch verläuft.

3. Fliehkraftabscheider nach Anspruch 1 oder 2, dadurch gekennzeichnet, daß der ringförmige Hohlraum (9) mit einem gasdurchlässigen Füllmaterial (10) ausgefüllt ist.

4. Fliehkraftabscheider nach Anspruch 3, dadurch gekennzeichnet, daß das Füllmaterial (10) eine hohe Wärmeleitfähigkeit aufweist.

5. Fliehkraftabscheider nach Anspruch 4, dadurch gekennzeichnet, daß das Füllmaterial (10) Metallwolle ist.

6. Fliehkraftabscheider nach Anspruch 3, dadurch gekennzeichnet, daß das Füllmaterial (10) Mineralwolle ist.

7. Fliehkraftabscheider nach Anspruch 3, dadurch gekennzeichnet, daß das Füllmaterial (10) ein textiles Fasermaterial ist.

8. Fliehkraftabscheider nach Anspruch 3, dadurch gekennzeichnet, daß das Füllmaterial (10) ein poröses Kunststoffmaterial ist.

9. Fliehkraftabscheider nach einem der vorhergehenden Ansprüche, dadurch gekennzeichnet, daß zwischen dem ringförmigen Hohlraum (9) und der Außenwand (12) ein ringförmiger Staubauffangraum (13) gebildet ist, der von dem ringförmigen Hohlraum (9) durch ein Filter (11) getrennt ist.

10. Fliehkraftabscheider nach Anspruch 9, dadurch gekennzeichnet, daß der Filter (11) ein Drahtsieb ist.

11. Fliehkraftabscheider nach einem der vorhergehenden Ansprüche, dadurch gekennzeichnet, daß der ringförmige Hohlraum (9) mit Druckauseleichsöffnungen (14) versehen ist.

12. Fliehkraftabscheider nach Anspruch 11, dadurch gekennzeichnet, daß die Druckausgleichsöffnungen (14) zum Ringraum (9) führen.

13. Fliehkraftabscheider nach Anspruch 11, dadurch gekennzeichnet, daß die Druckausgleichsöffnungen (14) mit den Auslaßöffnungen (16) in Verbindung stehen.

14. Fliehkraftabscheider nach einem der vorhergehenden Ansprüche, dadurch gekennzeichnet, daß er konzentrisch einen Zünder (1) und eine einen Festtreibstoffsatz (2) enthaltende Brennkammer (3) umgebend mit diesen zu einem Gasgenerator für Airbag-Schutzeinrichtungen zusammengesetzt ist.

15. Fliehkraftabscheider nach einem der Ansprüche 1 bis 13, dadurch gekennzeichnet, daß er axial an einen Zünder (1) und eine einen Festtreibstoffsatz (2) enthaltende Brennkammer (3) anschließend mit diesen zu einem Gasgenerator für Airbag-Schutzeinrichtungen zusammengesetzt ist.
